## Europäisches Patentamt

## European Patent Office

## Office européen des brevets

(19)

(11) Veröffentlichungsnummer: **0 145 745**
**B1**

(12) **EUROPÄISCHE PATENTSCHRIFT**

(45) Veröffentlichungstag der Patentschrift:
**10.08.88**

(21) Anmeldenummer: **84902205.8**

(22) Anmeldetag: **29.05.84**

(86) Internationale Anmeldenummer:
**PCT/EP 84/00165**

(87) Internationale Veröffentlichungsnummer:
**WO 84/04960 (20.12.84 Gazette 84/30)**

(51) Int. Cl.⁴: **G 01 B 11/27**

(54) **VORRICHTUNG ZUM FESTSTELLEN VON FLUCHTUNGSFEHLERN HINTEREINANDER ANGEORDNETER WELLEN.**

(30) Priorität: **03.06.83 DE 3320163**

(43) Veröffentlichungstag der Anmeldung:
**26.06.85 Patentblatt 85/26**

(45) Bekanntmachung des Hinweises auf die Patenterteilung:
**10.08.88 Patentblatt 88/32**

(84) Benannte Vertragsstaaten:
**BE CH DE GB LI NL SE**

(56) Entgegenhaltungen:
**DE-A-1 937 465**
**DE-A-2 316 810**
**FR-A-1 516 769**
**FR-A-2 469 705**
**US-A-2 864 280**
**US-A-3 323 408**

**DE-Zeitschrift Instandhaltung, Dezember 1982, Verlag Moderne Industrie, Landsberg: "Die Kunst des Ausrichtens übernimmt jetzt der Computer"**

(73) Patentinhaber: **PRÜFTECHNIK DIETER BUSCH & PARTNER GmbH & CO, Postfach 51, D-8045 Ismaning (DE)**

(72) Erfinder: **LYSEN, Heinrich, Kirchenstrasse 95, D-8000 München 80 (DE)**

(74) Vertreter: **Hieke, Kurt, Stadlerstrasse 3, D-8013 Haar bei München (DE)**

### Beschreibung

Die Erfindung bezieht sich auf ein Verfahren nach dem Oberbegriff des Patentanspruchs 1 und eine Vorrichtung nach dem Oberbegriff des Anspruchs 2.

Vorrichtungen dieser Art werden in der Hauptsache eingesetzt, um zwei Maschinen, deren Wellen miteinander starr zu kuppeln sind, vor dem Zusammenschließen genau ausrichten zu können. Eine solche Meßvorrichtung ist in "Instandhaltung", Dezember 1982, Verlag moderne industrie, Landsberg ("Die Kunst des Ausrichtens übernimmt jetzt der Computer") beschrieben.

Bekannte Vorrichtungen zum Feststellen von Art und Ausmaß eventueller Fluchtungsfehler arbeiten rein mechanisch mit einem Stab als Meßzeiger und mit einer mechanischen Meßuhr oder auch mit einem berührungslos arbeitenden induktiven Abstandsmesser als Meßempfänger, der beim gemeinsamen Durchdrehen der Wellen vom Stab aktiviert wird und einen dem Fluchtungsfehler der Wellen entsprechenden Meßwert liefert. Das gemeinsame Durchdrehen der Wellen kann so durchgeführt werden, daß beide Wellen gleichzeitig im Gleichlauf gedreht werden, oder auch so, daß erst die eine Welle und dann die andere Welle jeweils um den gleichen Winkel gedreht wird, so daß in jedem Falle beide Wellen zum Zeitpunkt jeder Meßwertablesung gegenüber der Winkelposition, die sie bei der vorhergehenden Ablesung eingenommen haben, um den gleichen Winkel verlagert worden sind. Bei den bekannten Vorrichtungen gehen in den Meßwert Fehler ein, die systembedingt sind und z. B. durch die Schwerkraft hervorgerufen werden, die in unterschiedlicher Weise in den verschiedenen Winkelstellungen auf den Stab bzw. das die Meßuhr oder den induktiven Abstandsmesser tragende Gestänge einwirkt. Da die Flucht der Wellen sehr genau stimmen muß, ist bei den bekannten Vorrichtungen ein hoher baulicher Aufwand erforderlich, um die Meßwertfehler in dem zulässigen Fluchtungstoleranzbereich zu halten.

Der Erfindung liegt die Aufgabe zugrunde, ein Verfarhen bzw. eine Vorrichtung für den im Oberbegriff des Patentanspruchs 1 bzw. 2 angegebenen Zweck zu schaffen, bei der mit vergleichsweise geringem baulichen Aufwand eine sehr hohe Meßgenauigkeit erzielbar ist und die überdies ein rasches Arbeiten mit unmittelbarer Erkennung eventueller Fehler nach Parallel- und/oder Winkelversatz sowie hinsichtlich der jeweiligen Fehlergröße ermöglicht. Die Anzeige eines Fluchtungsfehlers, bei dem die Mittelachsen der Wellen einander im Abstand überkreuzen, soll dabei in einer Weise erfolgen, die den Fehler sofort in eine reine Parallelversatzkomponente und eine reine Winkelversatzkomponente auflöst, so daß beide Fehlerarten mit einem einzigen Meßvorgang in Form des Durchdrehens der Wellen um 360° gesondert erkennbar und danach in einem einzigen Richtvorgang an der einen Maschine gegenüber der anderen behebbar sind.

Die vorstehende Aufgabe wird durch die im Anspruch 1 bzw. 2 angegebenen Merkmale gelöst.

Bei der erfindungsgemäßen Vorrichtung sind die auf den einzelnen Wellen anzuordnenden Vorrichtungteile optisch miteinander gekoppelt, so daß kein ausladendes Gestänge vorhanden ist, das unter dem Einfluß der Schwerkraft Meßfehler verursachen könnte. Eventuelle Fluchtungsfehler der Welle manifestieren sich beim Meßempfänger im Verlaufe des gemeinsamen, nach einer der beiden oben geschilderten Alternativen durchgeführten Durchdrehens der Wellen um 360° als Änderung des Abstandes des Lichtstrahl-Auftreffpunktes von dem wellenfesten Bezugspunkt, wobei die zur ersten Welle radiale Komponente der Abstandsänderung dem reinen Parallelversatz und die dazu senkrechte Komponente dem reinen Winkelversatz entspricht. Das letztere kommt daher, daß bei der Erfindung gleichzeitig drei besondere Eigenschaften ausgenützt werden, die ein rechtwinkliges Spiegelprisma aufweist. Die eine besteht darin, daß eine Verschwenkung des Prismas um die bei seinem 90°-Winkel liegende Scheitellinie auf die Reflexion des Lichtstrahls zum weiteren Meßempfänger hin keinen Einfluß hat. Die zweite besteht darin, daß sich eine Drehung des Prismas um eine zu der vorgenannten Scheitellinie senkrechte, zu seiner Hypotenusenebene parallele Achse mit einer bezüglich des Verdrehungswinkels um diese Achse doppelten Winkel zwischen dem auf das Prisma fallenden und dem von diesem reflektierten Strahl äußert, so daß die zur Radialrichtung senkrechte Komponente der Abstandsänderung beim weiteren Meßempfänger direkt dem reinen Winkelversatz zwischen den beiden Wellen entspricht. Und die dritte Eigenschaft besteht schließlich darin, daß eine Verlagerung des Prismas parallel zu sich selbst in Richtung der letztgenannten, zu der Scheitellinie senkrechten und zur Hypotenusenebene parallelen Achse zu einer Änderung des in der Verlagerungsrichtung gemessenen Abstandes zwischen dem einfallenden Lichtstrahl und dem reflektierten Lichtstrahl in einem bezüglich der Größe dieser Verlagerung doppelten Ausmaß führt und so einen parallelversatz wiedergibt. Bei der erfindungsgemäßen Vorrichtung werden somit im Verlaufe des Durchdrehens der Wellen um 360° in form der beiden Komponenten der Abstandsänderung zwei Gruppen von Meßwerten erhalten, von denen die eine, die die Änderung der Abstandskomponente des Lichtstrahlauftreffpunktes vom Bezugspunkt z. B. radial zur ersten Welle umfaßt, den reinen Parallelversatz anzeigt, während die andere, die die Änderung der dazu senkrechten Abstandskomponente umfaßt, den reinen Winkelversatz wiedergibt. Daraus sind dann

2

leicht die Werte zu ermitteln, um die die eine Maschine gegenüber der anderen z. B. der Höhe und der Seite nach, gegebenenfalls in unterschiedlichem Ausmaß, an den vorderen und den hinteren Auflagepunkten verrückt werden muß, um den Fluchtungsfehler in einem Zuge, d.h. ohne Vornahme einer erneuten Messung nach erfolgter Teilkorrektur, zu beseitigen.

Die Verwendung von Spiegelprismen mit einem auf das Prisma gerichteten Lichtstrahl als Meßzeiger und einem Meßempfänger, der den vom Prisma reflektierten Strahl empfängt, der entsprechend einer Verlagerung des Prismas verschoben wird, ist auf dem Gebiete der Feinmeßtechnik für sich bereits bekannt. Es wurde jedoch bisher von den vorgenannten drei Eigenschaften nur die den Parallelversatz wiedergebende Abstandsänderung zwischen dem einfallenden und dem reflektierten Lichtstrahl und die Unempfindlichkeit des Prismas gegen Kippen um eine zum Scheitel parallele Achse für die Meßzwecke ausgenutzt, während die oben erörterte dritte Eigenschaft der Änderung des Winkels zwischen einfallendem und reflektiertem Lichtstrahl bei einer Drehung des Prismas um eine zur Scheitellinie senkrechte und zur Hypotenusenebene parallele Achse als störend angesehen und durch passende Hilfsmittel unterdrückt wurde. (DE-Buch: Kurt Räntsch, "Die Optik in der Feinmeßtecknik", Carl Hanser Verlag, insbesondere S. 233 u. 234)

Die abhängigen Ansprüche betreffen vorteilhafte Ausgestaltungen des Gegenstandes des Anspruches 2. Die Erfindung wird nachstehend an Hand der Zeichnung an Ausführungsbeispielen noch näher erläutert:

In der Zeichnung zeigt:

Fig. 1 die auf die Wellen zweier auszurichtender Maschinen aufgesetzte Vorrichtung in schematischer Ansicht unter Darstellung der Maschinen, von der Seite gesehen,

Fig. 2 die Vorrichtung gemäß Fig. 1 im auf die Wellen aufgesetzten Zustand mit näheren Einzelheiten, ebenfalls in Seitenansicht,

Fig. 3a eine bevorzugte Ausführung des Meßgebers schematisch in Draufsicht,

Fig. 3b die Vorderansicht zu Fig. 3a (für den Betrachter der Fig. 3a von rechts gesehen),

Fig. 4a das als Meßempfänger auf der zweiten Maschinenwelle wirkende Prisma in Seitenansicht sowie in verschiedenen Winkelpositionen bezüglich der zur Zeichenebene senkrechten Scheitellinie beim 90° Winkel,

Fig. 4b das Prisma aus Fig. 4a in Ansicht von oben in zwei verschiedenen Winkelpositionen bezüglich einer zu der Scheitellinie senkrechten, zu Hypotenusenebene des Prismas parallelen Drehachse,

Fig. 5a den Schnitt durch einen bei der Erfindung als weiterer Meßempfänger eingesetzten analogen photoelektrischen Halbleiter-Positions-Detektor zur Darstellung des Funktionsprinzips,

Fig. 5b den Funktionsdetektor nach Fig. 5a in zweiachsiger Ausführung von vorn gesehen,

Fig. 5c den Querschnitt durch den Detektor gemäß Fig. 5b entlang der Schnittlinie Vc - Vc,

Fig. 6a die Vorderansicht einer anderen Ausführung des weiteren Meßempfängers,

Fig. 6b den Querschnitt durch den Meßempfänger gemäß Fig. 6a entlang der Schnittlinie VIb - VIb in Fig. 6a ,

Fig. 6c den Querschnitt durch den Meßempfänger gemäß Fig. 6a entlang der Schnittlinie VIc - VIc in Fig. 6a, und

Fig. 7 eine perspektivische schematische Darstellung des Meßvorganges und der bei der Drehung der Wellen im Abstand von 90° über einen Winkelbereich von 360° auftretenden Ablagewerte.

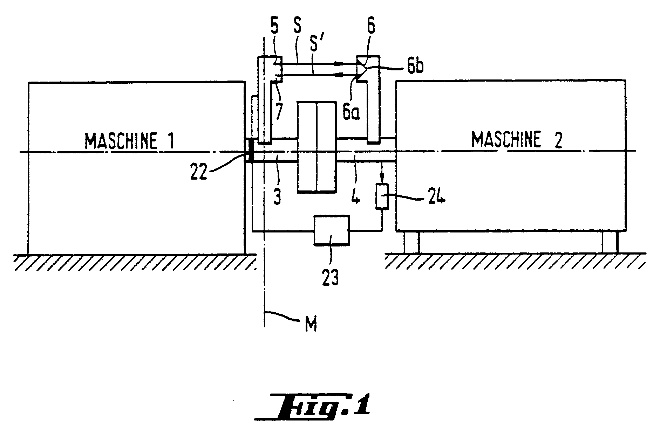

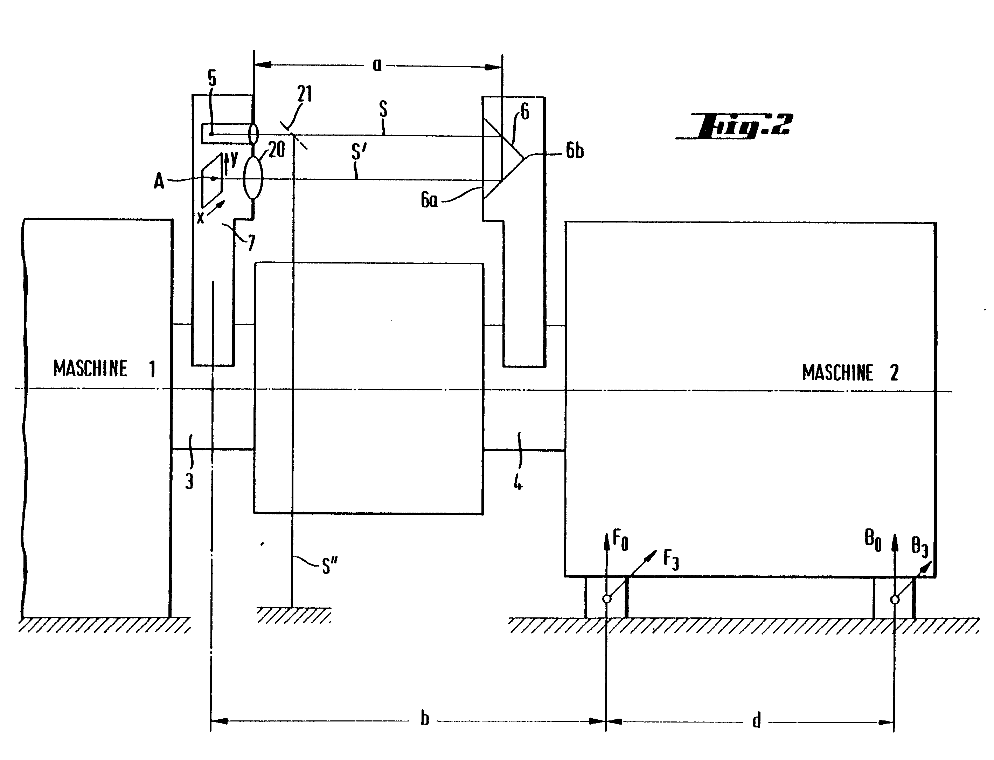

In Fig. 1 und Fig. 2 der Zeichnung sind zwei Maschinen 1 und 2 dargestellt, die zusammenzuschließen sind und vor dem Zusammenkuppeln der Wellen so ausgerichtet worden sind, daß die Mittelachsen der Wellen fluchten. Zur Feststellung späterer Fluchtungsfehler werden die Maschinen 1 und 2 laufend überwacht, wofür auf den Maschinenwellen 3 und 4 eine optische Vorrichtung, bestehend aus einem auf der Welle 3 starr befestigten, als Meßgeber wirkenden Lichtsender 5, einem auf der anderen Welle 4 starr befestigten, als Meßempfänger wirkenden rechtwinkligen Prisma 6 und einem weiteren Meßempfänger 7, der wie der Lichtsender 5 auf der Welle 3 starr befestigt ist, angebracht ist.

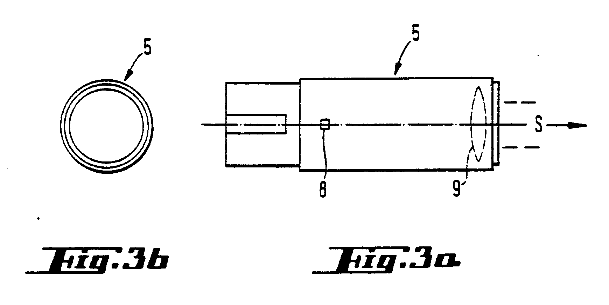

Der Lichtsender 5 weist gemäß Fig. 3a und 3b einen Laser-Kristall 8 und eine Kollimator-Linse 9 auf und erzeugt einen Lichtstrahl S von äußerst geringer Divergenz in der Größenordnung von weniger als 1 mrad, den er parallel zur Mittelachse der Welle 3 im Abstand von dieser zur Maschine 2 hin aussendet. Auf der Welle 4 trifft der Lichtstrahl S auf das rechtwinklige Prisma 6, das in entsprechendem Abstand von der Mittelachse der Maschine 2 so ausgerichtet ist, daß seine Hypotenusenebene 6a zur Mittelachse der Welle 4 der Maschine 2 senkrecht liegt und die beim 90° Winkel des Prismas liegende Scheitellinie zu der Radialebene der Welle 4, die das Prisma etwa in der Mitte schneidet, senkrecht verläuft.

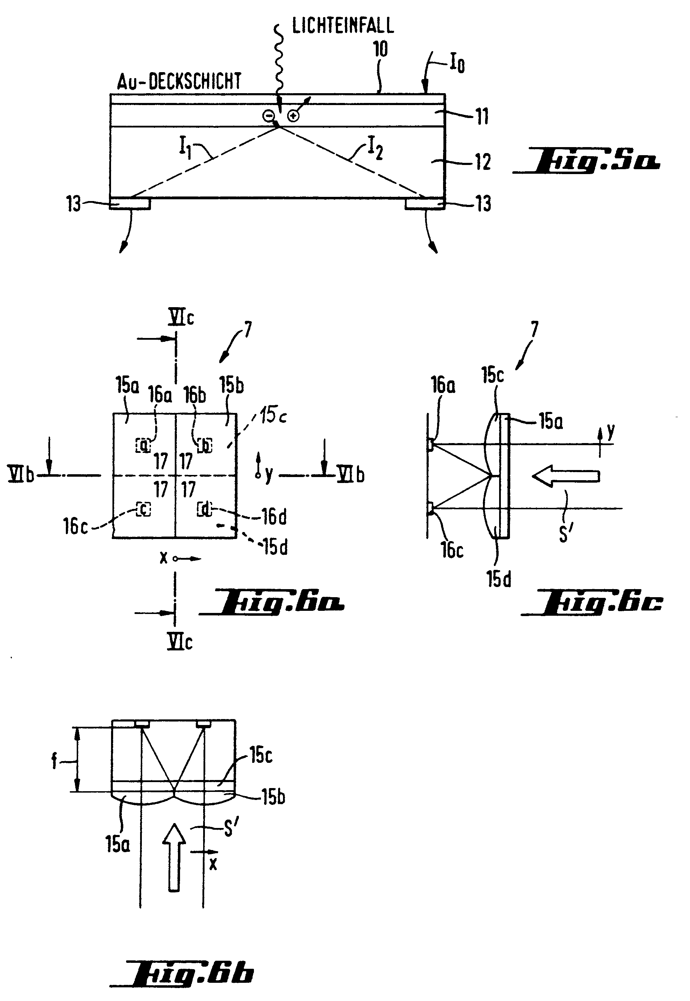

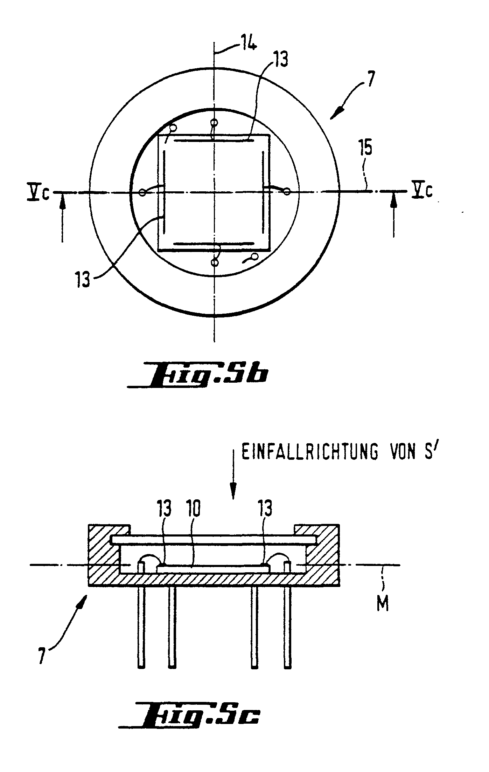

Das Prisma reflektiert den Lichtstrahl S des Lichtsenders 5 zur Maschine 1 als Lichtstrahl S' zurück, und dieser Lichtstrahl S' fällt dort auf den Meßempfänger 7, der gemäß Fig. 5a , Fig. 5b und Fig. 5c ein zweiachsiger analoger photoelektrischer Halbleiter-Positions-Detektor sein oder aus der in den Figuren 6a - 6c dargestellten Kombination aus Linsen und Photodetektoren bestehen kann.

In der Ausführung als zweiachsiger, analoger photoelektrischer Halbleiterdetektor gemäß Fig. 5a - 5c weist der Meßempfänger 7 eine Deckschicht 10 aus Gold, darunter eine Verarmungszone 11 und, wiederum darunter, ein hochohmiges Substrat 12 auf, wobei der Gold-Deckschicht 10 ein Strom $I_o$ zugeführt wird und am hochohmigen Substrat seitlich sowie oben und unten Kontaktstreifen 13 entlang des im wesentlichen quadratischen Querschnitts des Substrats angeordnet sind, über die der zugeführte Strom $I_o$ in Teilströme aufgeteilt abfließt. Die Aufteilung des Stromes $I_o$ richtet sich nach der Stelle des Lichteinfalls, mit der ein Lichtstrahl auf die Gold-Deckschicht im wesentlichen senkrecht auftrifft. In der Ausführung nach Fig. 5b und 5c als zweiachsiger Positions-Detektor wird der zugeführte Strom $I_o$ in vier Teilströme aufgeteilt, die über die einzelnen Kontaktstreifen 13 abfließen und hinsichtlich ihrer Größe von dem Abstand abhängen, den der Lichtauftreffpunkt vom Zentrum hat. Wenn der Strahl also genau in die Mitte der mit der Verarmungszone und dem Substrat deckungsgleichen, quadratischen Gold-Deckschicht auftrifft, sind die vier Teilströme untereinander gleich groß. Aus einer eventuellen Stromdifferenz an den in Bezug aufeinander gegenüberliegenden Paaren von Kontaktstreifen 13 sind die rechtwinkligen Komponenten des Abstandes eines außermittigen Lichtauftreffpunktes von der Koordinatenmitte ablesbar.

Positions-Detektoren der vorstehend geschilderten Art sind bekannt und im Handel erhältlich.

Der Positionsdetektor gemäß Fig. 5a - 5c ist als Meßempfänger 7 auf der Welle 3 so angeordnet, daß die eine Symmetrieebene 14 (Fig. 5b) mit einer Radialebene der Welle 3 zusammenfällt, und die andere Symmetrieebene 15 dazu senkrecht steht und zur Mittelachse der Welle 3 parallel liegt.

Das gleiche Ergebnis wie mit dem Positions-Detektor gemäß Fig. 5a - 5c ist auch mit dem Detektor gemäß Fig. 6a - 6c erzielbar, der aus vier Zylinderlinsen 15a - 15d und vier Photodetektoren 16a, 16d besteht, die in Lichteinfallsrichtung im Abstand f dahinter angeordnet sind. Die vier Zylinderlinsen 15a - 15d sind paarweise nebeneinander und die Paare hintereinander so angeordnet, daß die Mittelachsen eines Paares zueinander parallel verlaufen, von Paar zu Paar aber einander unter rechtem Winkel kreuzen, wobei die plan-konvexen Linsen mit ihren Planseiten Rücken an Rücken aneinandergrenzen. Die beiden, dem einfallenden Lichtstrahl zugewendeten Linsen 15a, 15b fokussieren das auf sie auftreffende Licht jeweils auf die Mittellinie der hinter ihnen angeordneten Photodetektoren 16a, 16c bzw. 16b, 16d, während die dahinter befindlichen Zylinderlinsen 15d, 15c das auf sie fallende Licht auf die gemeinsame Mittellinie der hinter ihnen befindlichen Photodetektoren 15a, 15b bzw. 15c, 15d fokussieren. Das auf die Linsenanordnung von vorne auftreffende Licht wird also durch die Linsen auf die vier Diodenpunkte gebündelt, wobei die Stärke des Lichts und damit das Ausgangssignal der Photodetektoren von dem Anteil abhängt, der aus dem auftreffenden Strahl auf die einzelnen Linsenquadranten aus jeweils zwei gekreuzten Halblinsen entfällt. Diese Quadranten sind in Fig. 6a mit der Bezugszahl 17 belegt.

Auch diese Ausführung des weiteren Meßempfängers 7 liefert also von den Dioden 16a - 16d her Ströme, die untereinander gleich sind, wenn der Lichteinfall zur Zylinder-Linsen-Anordnung symmetrisch ist, während sich bei unsymmetrischem Lichteinfall paarweise Stromdifferenzen ergeben, die für die Abweichung des Lichteinfalls aus der Mittellage nach den in Richtung der Zylinderachsen liegenden Koordinaten charakteristisch sind.

Es gilt folgende Formel für die Abhängigkeit der Komponenten x und y

$$y \approx \frac{I_a + I_b - I_c - I_d}{I_a + I_b + I_c + I_d},$$

$$x \approx \frac{I_b + I_d - I_a - I_c}{I_a + I_b + I_c + I_d},$$

wobei $I_a$, $I_b$, $I_c$, $I_d$

die Photodetektorströme sind.

Auch der Detektor gemäß Fig. 6a - 6c ist auf der Welle 3 so angeordnet, daß die eine Detektionsrichtung entsprechend der einen Verschiebungskoordinate des Lichteinfalls radial zur Welle verläuft und die andere senkrecht dazu.

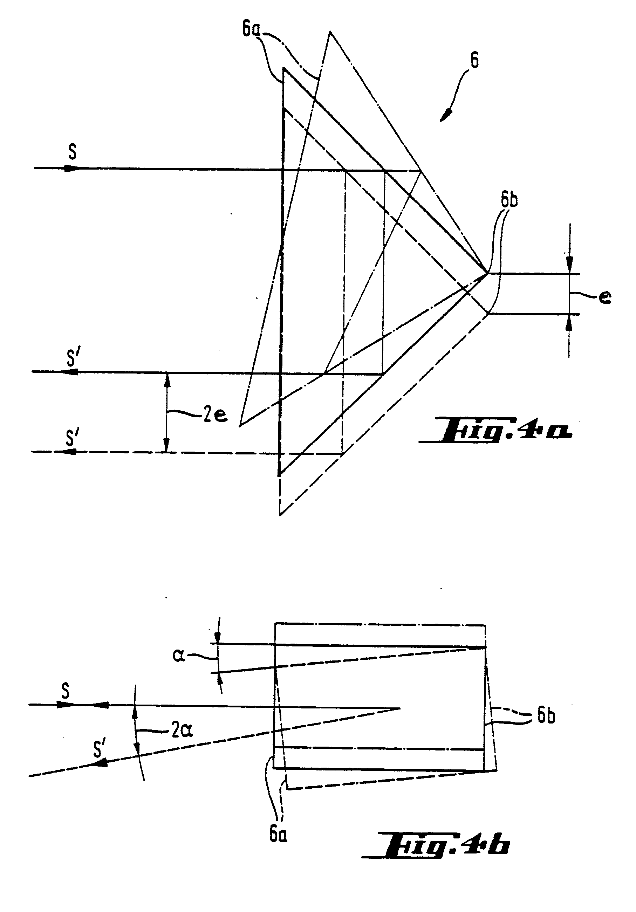

Die Fig. 4a und 4b zeigen das Prisma 6 in verschiedenen Stellungen. Dabei fällt die Zeichenebene der Fig. 4a mit einer Radialebene der Welle 4 zusammen und die Scheitellinie 6b beim rechten Winkel des Prismas steht darauf senkrecht.

Wenn der vom Lichtsender ausgehende Lichtstrahl S senkrecht auf die Hypotenusenebene 6a des Prismas auftrifft, so tritt er als Lichtstrahl S' auch wieder senkrecht dazu in einem vorgegebenen Abstand aus. Wird das Prisma um eine zur Scheitellinie 6b parallele Achse verschwenkt, so ändert dies nichts an den Reflexionsverhältnissen. Eine Änderung des Lichteinfallswinkels in der durch die Zeichenebene der Fig. 4a gegebenen Radialebene der Welle 4 hat also auf die Reflexionsverhältnisse keinen Einfluß. Eine Verschiebung des Prismas parallel zur Hypotenusenebene 6a wirkt sich aber in doppelter Größe auf den Abstand zwischen dem eintretenden Lichtstrahl S und dem austretenden Lichstrahl S' aus.

Andererseits kommt es bei einer Verschwenkung des Prismas um eine zur Scheitellinie 6b senkrechte sowie zur Hypotenusenebene 6a parallele Achse zu einer Änderung des Reflexionswinkels in Richtug senkrecht zur Zeichenebene der Fig. 4a in bezüglich der Verschwenkung doppeltem Ausmaß. Dies bedeutet, daß ein Wandern des Auftreffpunktes A des Lichtstrahls S' auf dem Meßempfänger 7 in Richtung radial zur Welle 3 nur von einem Parallelversatz der Wellen 3 und 4 und ein Wandern in Richtung senkrecht dazu nur von einem Winkelversatz der Wellen 3 und 4 herrühren kann.

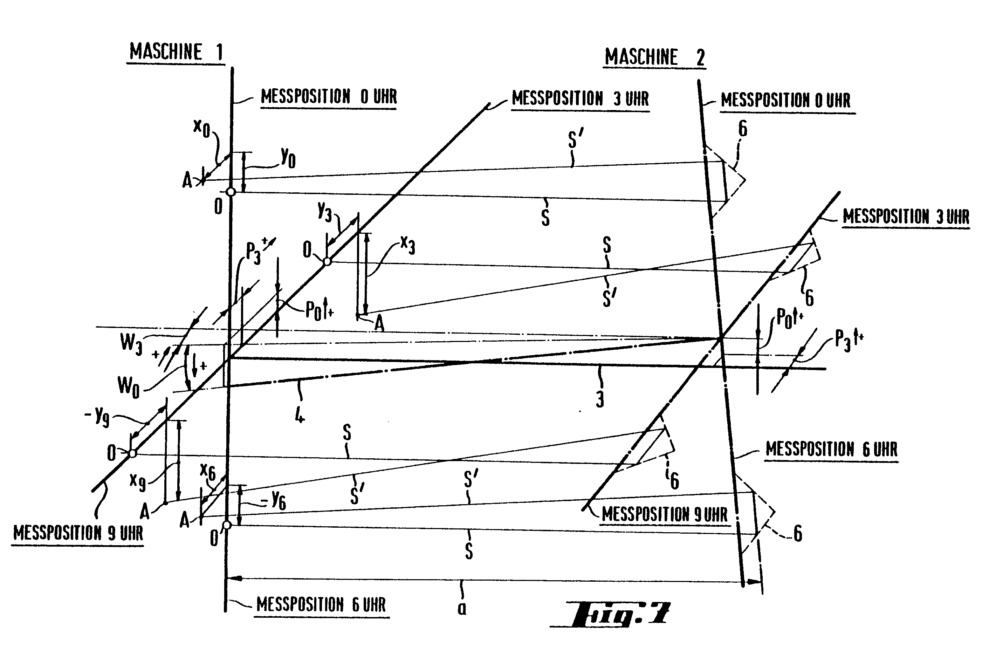

Bei bestehendem Parallel- und Winkelversatz kommt es zu diesem Wandern des Auftreffpunktes A in den genannten Richtungen, wenn die beiden Wellen nicht ganz fluchten und eine volle Umdrehung über 360° ausführen. Dabei genügt es, Wertpaare aufzunehmen, die sich in Winkelstellungen ergeben, die von einer Ausgangslage jeweils um 90° verschieden sind. Die Ausgangslage und weitere Meßpositionen in den einzelnen Umdrehungen markiert ein dehzahlsynchron arbeitender nicht dargestellter Winkelpositionsgeber. In Fig. 7 ist schematisch sowie in perspektivischer Ansicht ein Meßzyklus dargestellt, den die auf den Maschinenwellen angeordneten Teile der optischen Vorrichtung bei einem sich über 360° erstreckenden Meßvorgang durchlaufen, wobei angenommen ist, daß die eine Maschine gegenüber der anderen sowohl einen Parallelversatz als auch einen Winkelversatz aufweist. Die mit y bezeichneten Komponenten sind die Komponenten des Parallelversatzes und werden jeweils radial zur Welle gemessen, die dazu senkrechten Komponenten x sind die Komponenten des Winkelversatzes.

Die Indices bei den x- und y- Werten entsprechen der jeweiligen Meßposition, die im Hinblick auf die Uhrzeigerstellung als 0-Uhr (Ausgangsposition), 3-Uhr, 6-Uhr und 9-Uhr bezeichnet ist, was einer Drehung der Wellen um 90°, 180° und 270° gegenüber der Ausgangsposition bei 0° entspricht.

Es läßt sich zeigen, daß der Parallelversatz in Richtung der in 0-Stellung befindlichen Radialebene gleich ist

$$P_0 = (y_0 - y_6)/4$$

und der Parallelversatz in dazu senkrechter Richtung gleich ist

$$P_3 = (y_3 - y_9)/4$$

Für den Winkelversatz in der 0-Stellung, also senkrecht zu der in der Ausgangsstellung befindlichen, den Lichtsender beinhaltenden Radialebene der Welle 3, gilt

$$W_0 = (x_3 - x_9)/4a$$

und für den Winkelversatz in der dazu senkrechten Richtung gilt

$$W_3 = (x_0 - x_6)/4a.$$

Aus diesen aus der Messung gewonnenen Werten könnten ggf. durch Heben oder Senken bzw. nach Links- oder nach Rechts-Rücken vorzunehmende Korrekturen an der Maschinenaufstellung leicht gemäß Nachstehendem errechnet werden, wobei die angegebenen Größen der Fig. 2 und der Fig. 7 entnommen sind:

$$F_0 = - P_0 - W_0 . b$$

$$F_3 = - P_3 - W_3 . b$$

$$B_0 = - P_0 - W_0 . (b + d)$$

$$B_3 = - P_3 - W_3 . (b + d)$$

wobei der Wert $F_0$ die Verlagerung der Maschine 2 an den vorderen Füssen in vertikaler Richtung
der Wert $F_3$ die Verlagerung der Maschine in seitlicher Richtung an den vorderen Füssen
der Wert $B_0$ die Verlagerung der Maschine 2 an den hinteren Füssen in vertikaler Richtung und
der Wert $B_3$ die Verlagerung der Maschine 3 an den hinteren Füssen in seitlicher Richtung
bedeuten, wobei davon ausgegangen ist, daß die Radialebene der Maschine 1, in der sich der Lichtsender befindet, in der Meßposition "0-Uhr" vertikal steht.

Da zur Ermittlung der Korrekturgrößen die Kenntnis des Abstandes b zwischen der Meßebene M und dem Mittelpunkt der Vorderfüsse der Maschine 2 nötig ist, ist zur Erleichterung der Feststellung in den Strahlengang S vor dem Sender ein Strahlteiler 21 eingeschaltet, der aus dem Lichtstrahl S einen dazu senkrechten Teilstrahl S'' seitwärts an eventuellen Kupplungsteilen und dergleichen vorbei ablenkt, so daß der Auftreffpunkt dieses Lichtstrahles S'' auf das Fundament als Marke für die Vornahme der Messung herangezogen werden kann.

Um Fehler durch natürliche Schwankungen des Umgebungslichts auszuschließen, empfiehlt es sich, den vom Lichtsender 5 ausgesandten Lichtstrahl S mit höherer Frequenz zu modulieren.

Anstelle eines Prismas könnte natürlich als funktionell gleichwertiges optisches System auch eine entsprechende Spiegelanordnung oder dergleichen eingesetzt werden.

Zum Zwecke der Erhöhung der Meßgenauigkeit des weiteren Meßempfängers 6 empfiehlt es sich, vor diesem eine Verkleinerungslinse 20 anzuordnen, die den Durchmesser des Lichtstrahles S - im Ausführungsbeispiel auf ein Viertel - verkleinert.

Die erfindungsgemäße Vorrichtung kann entweder nur für das anfängliche Ausrichten zweier an den Wellen gekoppelter Drehmaschinen vor deren Inbetriebnahme oder aber auch gegebenenfalls im Anschluß daran - für die laufende Überwachung des Fluchtungszustandes eingesetzt werden.

Im ersteren Falle werden die Wellen nach Aufsetzen der Vorrichtung gewöhnlich auf andere Weise, als von den Maschinen her, jeweils für einen Meßvorgang nach einer der beiden eingangs geschilderten Alternativen über eine volle Umdrehung gedreht, dabei in den verschiedenen Winkelpositionen die Meßwertpaare festgestellt, was zum Beispiel automatisch und gegebenenfalls unter gleichzeitiger Eingabe in einen Computer geschehen kann, und aus den gefundenen Meßwerten die Korrekturwerte errechnet und in passender Weise zur Anzeige gebracht, damit die nötigen Ausrichtkorrekturen an den Maschinen durchgeführt werden können. Nach der Durchführung der Korrektur wird dann die Vorrichtung wieder abgenommen und steht für den Richtvorgang an anderen Maschinen wieder zur Verfügung.

Für die laufende weitere Überwachung der Maschinen verbleibt die Vorrichtung hingegen permanent auch im Betrieb der Maschinen auf den Wellen, und die dauernde Errechnung eventueller Korrekturwerte ist dann im Anschluß an die ursprüngliche Ausrichtung nicht erforderlich, sondern es genügt, die Meßdaten laufend zur Anzeige zu bringen und/oder daraus ein Warnsignal bei Überschreitung eines zugelassenen Fehlausrichtungsbereiches abzuleiten. Zu diesem Zweck werden die im zweiten Meßempfänger 7 erzeugten elektrischen Signale, die den in den einzelnen Meßpositionen vorhandenen eventuellen Ablagekoordinaten des Lichtzeigerauftreffpunktes vom Detektormittelpunkt entsprechen, über Schleifringe, einen rotierenden Übertrager oder dergleichen 22 in der in Fig. 1 nur angedeuteten Weise zu einem Rechner 23, der gegebenenfalls eine Anzeigeeinrichtung aufweisen kann, fortlaufend übertragen und in diesem unter Mitwirkung eines Winkelpositionsgebers zur Schaffung der Anzeige beziehungsweise des Warnsignals in dem Fachmann geläufiger Weise verwertet. Der Winkelpositionsgeber ist in Fig. 1 ebenfalls nur angedeutet und mit 24 bezeichnet.

Unwuchten, die anfänglich ausgeglichen worden sind, können sich an den rotierenden Teilen, ebenso wie Fluchtungsfehler, im Betriebe der Maschinen nachträglich wieder einstellen. Solche erneuten Unwuchten führen zu Wellenschwingungen, die sich an den beiden Wellen gewöhnlich etwas unterschiedlich auswirken und somit in Ablagesignalen äußern, die allerdings eine besondere Charakteristik haben und somit von denjenigen, die aus Fluchtungsfehlern resultieren, - gegebenenfalls als Überlagerung - unterscheidbar sind. Damit ist eine Gefahrenerkennung einschließlich der Erkennung der Ursache gewährleistet.

Diese Art der laufenden Überwachung ist nicht nur ein vollwertiger Ersatz für die bisherigen Arten der laufenden Überwachung von an den Wellen gekoppelten Drehmaschinen, bei denen alternativ Schwingungen der Wellenblöcke erfaßt, das Lagerspiel beobachtet, die Lagertemperatur gemessen etc. wurde und kritische Zustände sich häufig erst äußerten, wenn ein gewisser Schaden bereits vorhanden war. Sie ist vielmehr den bekannten Arten der Dauerüberwachung wegen der Differenzierbarkeit der verschiedenen Ursachen für gefährliche Betriebszustände und wegen der stets aktuellen Anzeige des Fluchtungszustandes überlegen.

**Patentansprüche**

1. Verfahren zum Feststellen, ob zwei hintereinander angeordnete Wellen (3, 4) hinsichtlich ihrer Mittelachsen fluchten oder gegeneinander parallel und/oder im Winkel und ggf. in welchem Ausmaß versetzt sind, wobei von der einen - ersten - Welle (3) her ein dieser gegenüber festgelegter Meßzeiger (S) zu einem auf der anderen - zweiten - Welle (4) befindlichen, dieser gegenüber fixierten Referenzelement (6) gerichtet wird, die Wellen jeweils um untereinander gleiche Winkel in verschiedene, innerhalb eines Winkelbereiches von 360° gelegene Meßpositionen gedreht werden, in den Meßpositionen Signale erzeugt werden, die der Veränderung der relativen Lage zwischen Meßzeiger (S) und Referenzelement (6) nach Größe und Richtung entsprechen, und aus diesen Signalen die Fluchtungsfehler ermittelt werden, dadurch gekennzeichnet, daß als Meßzeiger ein zur Mittelachs der ersten Welle (3) etwa paralleler von einer Lichtquelle (5) erzeugter Lichtstrahl (S) in Form eines Lichtbündels von geringer Divergenz auf rechtwinkliges Spiegelprisma (6) oder ein entsprechendes optichen System gerichtet wird, daß als Referenzelement so auf der zweiten Welle (4) angeordnet worden ist, daß seine den Winkel von 90° einschließenden ebenen Spiegelflächen sich in wesentlichen senkbrecht zu einer Radialebene der zweiten Welle (4) erstrecken, daß auf der ersten Welle (3) ein bezüglich der Lichtquelle (5) fest angeordnet Meßempfänger (7) so befestigt wird, daß der von der anderen Spiegelfläche der Spiegelanordnung reflektierte Lichtstrahl (S') auf ihn fällt, und daß mittels des Meßempfängers (7) zwei Signale erzeugt werden, die den Koordnaten (x, y) des Lichtstrahl-Auftreffpunktes (A) auf den Meßempfänger (7) von einem wellenfesten Bezugspunkt (0) in einer zur Mittelachse der ersten Welle (3) im wesentlichen senkrechten Meßebene (M) entsprechen.

2. Vorrichtung zum Feststellen, ob zwei hintereinander angeordnete Wellen (3, 4) hinsichtlich ihrer Mittelachsen fluchten oder gegeneinander parallel und/oder im Winkel und ggf. in welchem Ausmaß versetzt sind, bei der von der einen - ersten - Welle her (3) ein dieser gegenüber festgelegter Meßzeiger (S) zu einem auf der anderen - zweiten - Welle befindlichen, dieser gegenüber fixierten Referenzelement (6) gerichtet werden kann, bei der die Wellen in verschiedene, innerhalb eines Winkelbereiches von 360° gelegene Meßpositionen gedreht werden können und bei der, in den Meßpositionen Signale erzeugt werden können, die der Veränderung der relativen Lage zwischen Meßzeiger (S) und Referenzelement (6) nach Größe und Richtung entsprechen, und zur Durchführung des Verfahrens nach Anspruch 1, gekennzeichnet durch einen auf der ersten Welle (3) befestigbaren Lichtsender (5) zum Erzeugen eines Lichtstrahles (S) von geringer Divergenz, ein auf der zweiten Welle (4) befestigbares, dem Lichtstrahl (S) zugewendetes, rechtwinkliges Spiegelprisma (6) oder ein entsprechendes optisches System das als Referenzelement so auf der zweiten Welle (4) anzuordnen ist, daß seine der Winkel von 90° einschließenden ebenen Spiegelflächen sich im wesentlichen senkrecht zu einer Radialebene der zweiten Welle (4) estrecken, und durch einen auf der ersten Welle (3) befestigbaren und bezüglich des Lichtsenders (5) fest anzuordnenden Meßempfänger (7), der zwei Signale erzeugt, die den Koordinaten (x, y) des Lichtstrahl-Auftreffpunktes (A) auf dem Meßempfänger (7) von einem wellenfesten Bezugspunkt (0) in einer zur Mittelachse der ersten Welle (3) im wesentlichen senkrechten Meßebene (M) entsprechen.

3. Vorrichtung nach Anspruch 2 dadurch gekennzeichnet, daß der zweite Meßempfänger (7) ein zweiachsiger, analoger, photoelektrischer Halbleiter, Positions-Detektor ist.

4. Vorrichtung nach Anspruch 3, dadurch gekennzeichnet, daß dem Meßempfänger (7) eine den Durchmesser des Lichtstrahls (S') verkleinernde Optik (20) vorgeschaltet ist.

5. Vorrichtung nach einem der Ansprüche 2 bis 4, dadurch gekennzeichnet, daß der Lichtsender (5) eine Laser-Diode (8) aufweist.

6. Vorrichtung nach einem der Ansprüche 2 bis 5, dadurch gekennzeichnet, daß beim Lichtsender (5) in den Strahlengang des Lichtstrahles (S) ein Strahlteiler (21) eingefügt ist, der einen Teilstrahl (S'') unter einem Winkel von 90° zur Seite ablenkt.

7. Vorrichtung nach einem der Ansprüche 2 bis 6, dadurch gekennzeichnet, daß der Lichtstrahl (S, S') intensitätsmoduliert ist.

8. Vorrichtung nach einem der Ansprüche 2 bis 7, dadurch gekennzeichnet, daß die vom Meßempfänger (7) erzeugten Signale den rechtwinkligen Koordinaten (x,y) des Abstandes des Lichtstrahl-Auftreffpunktes (A) vom Bezugspunkt (0) in einem rechtwinkligen Koordinatensystem entsprechen, von dem die eine Koordinatenachse mit der Radiallinie (R) der ersten Welle (3) zusammenfällt, auf der der Durchstoßpunkt der optischen Mittelachse des Meßgebers (5) durch die Meßebene (M) liegt.

9. Vorrichtung nach einem der Ansprüche 2 bis 8, dadurch gekennzeichnet, daß für eine nach der ursprünglichen fluchtrechten Ausrichtung der Maschinen (1, 2) durchzuführende Dauerüberwachung des Fluchtungszustandes der Wellen (3, 4) die von dem Meßempfänger (7) erzeugten Signale im Betriebe der Maschinen (1, 2) über Schleifringe (22), einen rotierenden Übertrager oder dergleichen zu einer Auswerteinrichtung (23) übertragen werden, die in Verbindung mit einem drehzahlsynchron arbeitenden, augenblickliche vorbestimmte Winkelpositionen der Wellen (3, 4) kennzeichnenden Taktgeber (24) aus diesen Signalen die aktuelle Größe des Parallel- und/oder Winkelversatzes ermittelt und anzeigt und/oder bei Überschreitung eines zugelassenen Fluchtungsfehlerbereiches ein Warnsignal erzeugt.

**Claims**

1. Process for ascertaining whether two shafts (3, 4), arranged one after the other, are aligned with respect to their center lines or whether there is mutual parallel and/or angular displacement and, if so, what the extent of this displacement is, a measurement pointer (S) fixed with respect to the one-first-shaft (3) being directed from that first shaft to a reference element (6) located on the other - second-shaft (4) and fixed with respect to this second shaft, the shafts being rotated, at a time by equal angles, into different measuring positions lying within an angular range of 360°, signals, which correspond to the magnitude and direction of the change in the relative position of the measurement pointer (S) and the reference element (6), being generated in the measuring positions and alignment errors being ascertained from these signals, characterized in that, as measurement pointer, a light beam (S) generated by a light source (5) and being approximately parallel to the center line of the first shaft (3) is directed in the form of a light bundle of low divergence onto a rectangular mirror prism or a corresponding optical system , which has been arranged, as reference element, on the second shaft (4) in such a way, that its plane reflecting surfaces enclosing the angle of 90° extend substantially perpendicular to a radial plane of the second shaft (4), that a measurement receiver (7) fixedly arranged with respect to the light source (5) is so attached on the first shaft (3) that the light beam (S') reflected from the other reflecting surface of the mirror arrangement falls upon it, and that signals are produced by means of the measurement receiver (7) which correspond to the coordinates (x, y) of the point of incidence (A) of the light beam (S') on the measurement receiver (7) from a reference point (0) fixed with respect to the shaft and lying in a measurement plane (M) which is substantially perpendicular to the center line of the first shaft (3).

2. Device for ascertaining whether two shafts (3, 4) arranged one after the other are aligned with respect to their center lines or whether there is mutual parallel and/or angular displacement and, if so, what the extent of this displacement is, in which device a measurement pointer (S) fixed with respect to the one-first-shaft (3) may be directed from that first shaft to a reference element (6) located on the other- second-shaft and fixed with respect to this second shaft, in which device the shafts may be rotated into different measuring positions lying within an angular range of 360°, and in which device signals, corresponding as to the magnitude and to the direction to the change in the relativ position of the measurement pointer (S) and the reference element (6) may be generated in the measuring positions, and for performing the process according to claim 1, characterized by a light emitter (5), which may be fixed on the first shaft (3), for producing a light beam (S) of small divergence, a rectangular mirror prism (6) or a corresponding optical system, which may be fixed on the second shaft (4) and faces the light beam (S) and which is to be arranged on the second shaft (4) in such manner, that its plane mirror faces enclosing the angle of 90° extend substantially perpendicular to a radial plane of the second shaft (4), and by a measurement receiver (7), which may be fixed on the first shaft (3) and is to be fixedly arranged with respect to the light emitter (5) and which generates two signals corresponding to the coordinates (x, y) of the light-beam incidence point (A) on the measurement receiver (7) from a reference point (0) fixed with respect to the shaft and lying in a measurement plane (M) substantially perpendicular to the center line of the first shaft (3).

3. Device according to claim 2, characterized in that the measurement receiver (7) is a biaxial, analogous , photoelectric, semiconductor position detector.

4. Device according to claim 3, characterized in that an optical system (20) reducing the diameter of the light beam (S') is arranged in front of the second measurement receiver (7).

5. Device according to one of the claims 2 to 4, characterized in that the light emitter (5) comprises a laser diode (8).

6. Device according to one of the claims 2 to 5, characterized in that a beam divider deflecting a partial beam (S") aside at an angle of 90° is inserted at the light emitter (5) in the path of the light beam (S).

7. Device according to one of the claims 2 to 6, characterized in that the intensity of the light beam (S,S') is modulated.

8. Device according to one of the claims 2 to 7, characterized in that the signals generated by the measurement receiver 7 correspond to the rectangular coordinates (x, y) of the distance of the light-beam incidence point (A) from the reference point (0) in a rectangular coordinate system one coordinate axis of which coincides with the radial line (R) of the first shaft (3) on which the piercing point of the optical center line of the measurement transmitter (5) through the measurement plane (M) lies.

9. Device according to one of the claims 2 to 8, characterized in that for the purpose of permanently monitoring the alignment condition of the shafts (3, 4) after the initial alignment of the machines (1, 2), the signals generated by the measurement receiver (7) are transferred during the operation of the machines (1, 2) over slip rings (22), a rotating transmitter or the like to an evaluating device (23) that, in conjunction with a clock generator (24) working synchronously with the speed of rotation and marking momentary predetermined angular positions of the shafts (3, 4), ascertains from the signals and displays the actual magnitude of the parallel and/or angular misalignment and/or produces a warning signal when a permissible alignment error range is exceeded.

**Revendications**

1. Procédé pour déterminer si les axes de deux arbres (3, 4) disposés l'un derrière l'autre sont alignés ou s'ils sont décalés parallèlement et/ou angulairement et, le cas échéant, dans quelle mesure, qui consiste à diriger à partir de l'un des arbres - le premier- (3) un doigt de mesure (S), fixe par rapport à cet arbre, sur un élément de référence (6) se trouvant sur l'autre arbre - le second- (4) et fixe par rapport à celui-ci, à faire tourner les arbres respectivement d'un même angle pour les amener dans des positions de mesure différentes dans une plage angulaire de 360°, à produire dans les positions de mesure des signaux qui correspondent à la variation des positions relatives entre le doigt de mesure (S) et l'élément de référence (6) en grandeur et en direction, et à déterminer à partir de ces signaux les défauts d'alignement, caractérisé en ce qu'il consiste, à diriger comme doigt de mesure, un rayon lumineux (S), à peu près parallèle à l'axe du premier arbre (4), produit d'une source de lumière (5), et sous la forme d'un faisceau lumineux de faible divergence, sur un prisme rectangulaire à miroir (6) ou un système optique correspondante qui a été disposé comme élément de référence sur le second arbre (4), de manière à ce que ses surfaces réfléchissantes planes délimitant l'angle de 90° s'étendent sensiblement perpendiculaire à un plan radial du second arbre (4), à fixer sur le premier arbre (3) un récepteur de mesure (7) fixe relatif à la source de lumière (5), de manière à ce que le rayon lumineux (S'), réfléchi par l'autre surface réfléchissante du dispositif à miroir, arrive sur le récepteur de mesure (7), et à produire au moyen du récepteur de mesure (7) de signaux qui correspondent aux coordonées (x, y) du point d'incidence (A) du rayon lumineux (S') sur le récepteur de mesure (7) d'un point de référence (0) fixe par rapport à l'arbre dans un plan de mesure (M) sensiblement perpendiculaire à l'axe du premier arbre (3).

2. Dispositif pour déterminer si les axes de deux arbres (3, 4) disposés l'un derrière l'autre sont alignés ou s'ils sont décalés parallèlement et/ou angulairement et, le cas échéant, dans quelle mesure, dans lequel un doigt fixe par rapport à l'un des arbres - le premier - (3) peut être dirigé à partir de cet arbre sur un élément de référence (6) se trouvant sur l'autre arbre - le second - et fixe par rapport à celui-ci, dans lequel les arbres peut être fait tourner dans de positions de mesure différentes dans une plage angulaire de 360°, et dans lequel dans les positions de mesure des signaux peut être produit qui correspondent à la variation des positions relatives entre le doigt de mesure (S) et l'élément de référence (6) en gradeur et en direction, et pour exécuter le procédé suivant la revendication 1, caractérisé par un émetteur de lumière (5) qui peut être disposé sur le premier arbre (3) et qui est destiné à produire le rayon lumineux (S) de faible divergence, un prisme rectangulaire à miror (6) ou un système opitique correspondant, qui peut être disposé sur le second arbre (4), qui est tourné vers le rayon lumineux (S) et qui est à disposé comme élément de référence sur le second arbre (4), de manière à ce que ses surfaces réfléchissantes planes délimitant l'angle de 90° s'étendent sensiblement perpendiculaire à un plan radial du second arbre (4), et par un récepteur de mesure (7), qui peut être fixé sur le premier arbre (3), qui est à disposé de manière fix relatif à la source de lumière (5) et qui produit deux signaux qui correspondent aux coordonnées (x, y) du point d'incidence (A) du rayon lumineux sur le récepteur de mesure (7) d'un point de référence (0), fixe par rapport à l'arbre dans un plan de mesure (M) sensiblement perpendiculaire à l'axe du premier arbre (3).

3. Dispositif suivant la revendication 2, caractérisé par le fait que le récepteur de mesure (7) est un détecteur de positions à semiconducteurs du type photo-électrique, analogique et à deux axes.

4. Dispositif suivant la revendication 3, caractérisé par le fait qu'en amont du récepteur de mesure (7) est disposé un système optique (20) réduisant le diamètre du rayon lumineux (S').

5. Dispositif suivant l'une des revendications 2 à 4, caractérisés par le fait le émetteur de lumière (5) comporte une diode à laser.

6. Dispositif suivant l'une des revendications 2 à 5, caractérisés par le fait qu'au niveau du émetteur lumineuse (5) est prévu, dans la trajectoire lumineuse du rayon lumineux (6), un diviseur de rayons (21) qui dévie latéralement un rayon partiel (S'') sous un angle de 90°.

7. Dispositif suivant l'une des revendications 2 à 6, caractérisés par le fait que le rayon lumineux (S, S') est modulé en intensité.

8. Dispositif suivant l'une des revendications 2 à 7, caractérisé par le fait que les signaux produits par le récepteur de mesure (7) correspondent aux coordonnées rectangulaires (x, y) de la distance entre le point d'incidence (A) du rayon lumineux et le point de référence (0), dans un système de coordonnées rectangulaires dont un axe de coordonnées coïncide avec la droite radiale (R) du premier arbre (3), sur laquelle se situe le point d'intersection de l'axe optique médian du générateur de mesure (5) avec le plan de mesure (M).

9. Dispositif suivant l'une des revendications 2 à 8, caractérisé par le fait que pour assurer un contrôle permanent de l'état d'alignement des arbres (3, 4) après la réalisation de l'alignement initial correct des machines (1, 2), les signaux qui sont produits par le récepteur de mesure (7) sont transmis, pendant le fonctionnement des machines (1, 2), par l'intermédiaire de bagues de frottement (22), d'un transducteur rotatif, ou similaire, à un dispositif d'évaluation (23) qui, en liaison avec un générateur de signaux de cadence (24) opérant en synchronisme avec la vitesse de rotation et caractérisant de positions angulaires instantanées et déterminées à l'avance, détermine et affiche à partir de ces signaux la valeur actuelle du décalage du parallélisme ou du décalage angulaire et/ou fournit un signal d'alerte en cas de dépassement d'une plage admise pour les erreurs de l'alignement.

*Fig.1*

Fig.2

MASCHINE 1

MASCHINE 2

0 145 745

**Fig.3b**

**Fig.3a**

*Fig.4a*

*Fig.4b*

LICHTEINFALL

Au-DECKSCHICHT

10

$I_0$

11

$I_1$ $I_2$

12

13 13

*Fig.5a*

VIc

7

15a 16a 16b 15b

15c

VIb VIb

17 17

17 17

y

16c 16d

15d

x

*Fig.6a*

VIc

16a 15c

7

15a

y

16c

S'

15d

*Fig.6c*

f

15c

15b

15a

S'

x

*Fig.6b*

Fig.5b

EINFALLRICHTUNG VON S'

Fig.5c

**Fig. 7**